# DEMANDE DE BREVET EUROPEEN

(11) **EP 4 287 069 A1**
(43) Date de publication de la demande: **06.12.2023**
(21) Numéro de dépôt: 22177158.7
(22) Date de dépôt: 03.06.2022
(51) Int. Cl.: G06K 19/04, G06K 19/077, H01Q 1/22, H04B 5/00

(54) **PAIRE DE TRANSPONDEURS EN RÉSONANCE**

(71) Demandeur: The Swatch Group Research and Development Ltd, 2074 Marin (CH)
(72) Inventeur: RANDJELOVIC, Zoran, 2035 Corcelles (CH); MASPOLI, Jérôme, 3236 Gampelen (CH)
(74) Mandataire: ICB SA

(57) **Abrégé**

L'invention se rapporte à une paire de transpondeurs (1) comprenant un premier transpondeur (10) muni d'un premier système électronique (3) de gestion de l'envoi et de la réception de données et d'une première antenne, le premier système électronique (3) étant connecté à la première antenne, la paire de transpondeurs (1) comprenant un deuxième transpondeur (12) muni d'un deuxième système électronique (9) de gestion de l'envoi et de la réception de données et d'une deuxième antenne, le deuxième système électronique (9) étant connecté à la deuxième antenne, caractérisée en ce que la deuxième antenne est configurée et disposée pour que le deuxième transpondeur (12) forme un circuit résonateur de la première antenne.

L'invention se rapporte aussi à un dispositif électronique, notamment une pièce d'horlogerie comportant une telle paire de transpondeurs (20).

## Description

### Domaine technique de l'invention

L'invention concerne le domaine des transmissions de l'information et des télécommunications, et en particulier les transpondeurs comportant une antennes d'émission et/ou de réception.

### Arrière-plan technologique

Les transpondeurs sont des appareils électroniques configurés pour transmettre et/ou recevoir des données. Il existe des transpondeurs passifs de type RFID (pour Radio Frequency Identification en anglais), qui sont souvent destinés à coder et enregistrer des produits de consommation.

D'autres transpondeurs passifs sont par exemple utilisés dans les terminaux et cartes bancaires, par exemple pour un paiement sans contact. Ces transpondeurs sont généralement de type NFC (pour Near Field Communication en anglais), et permettent un transfert de données à faible distance.

La communication s'établie entre deux terminaux, chaque terminal comprenant un système électronique pour gérer et enregistrer les données, ainsi qu'une antenne pour transmettre et recevoir les données de l'autre terminal.

L'antenne a une grande importance pour déterminer la distance de fonctionnement de l'émission/réception entre les terminaux, mais ses dimensions doivent être très réduites pour limiter l'encombrement des terminaux. A cette fin, il existe des antennes en forme de portion de spirale, qui permettent d'avoir une longueur d'antenne suffisante dans un minimum de place. Le nombre de spires détermine l'inductance de l'antenne. Les points de connexion du système électronique sont agencés aux deux extrémités de la portion de spirale, c'est-à-dire à l'extrémité externe et à l'extrémité interne de la portion de spiral pour avoir une inductance suffisante et pour arriver à une distance de communication maximale.

Quand cela ne suffit pas, une deuxième antenne est agencée en parallèle de la première antenne, afin d'augmenter la distance de communication. La deuxième antenne fonctionne comme un circuit résonateur, de sorte que la fréquence nominale de l'ensemble des deux antennes ne change pas par rapport à la fréquence nominale de la portion de spirale seule. Grâce à la deuxième antenne, on obtient une augmentation de la distance de communication.

Cependant, la deuxième antenne occupe un volume qui sert seulement à cela. Ainsi, elle a cette unique fonction de former un circuit résonateur.

Par ailleurs, un transpondeur est généralement configuré pour effectuer une fonction unique. Par exemple, un transpondeur a soit pour fonction de permettre des paiements, soit de s'enregistrer ou de passer une barrière dans des transports en commun.

Ainsi, pour obtenir plusieurs fonctions, il est nécessaire d'associer plusieurs transpondeurs.

### Résumé de l'invention

L'invention a pour but de remédier aux inconvénients précités, et vise à fournir une paire de transpondeurs permettant d'associer deux fonctions différentes tout en gardant des antennes de dimensions réduites mais assurant la distance adéquate de communication.

La paire de transpondeurs comprend un premier transpondeur muni d'un premier système électronique de gestion de l'envoi et de la réception de données et d'une première antenne, le premier système électronique étant connecté à la première antenne, la paire de transpondeurs comprenant un deuxième transpondeur muni d'un deuxième système électronique de gestion de l'envoi et de la réception de données et d'une deuxième antenne, le deuxième système électronique étant connecté à la deuxième antenne.

La paire de transpondeurs est remarquable en ce que la deuxième antenne est disposée et configurée pour que le deuxième transpondeur forme un circuit résonateur de la première antenne.

Ainsi, les deux transpondeurs permettent, d'une part, d'associer deux fonctions différentes dans un même dispositif électronique, et d'autre part, chaque transpondeur forme un circuit résonateur pour l'autre transpondeur afin d'améliorer la distance de communication.

En effet, le circuit résonateur formé par le deuxième transpondeur, et en particulier par son antenne permet d'améliorer la distance de communication de l'antenne spirale de 10 à 20%. Ainsi, les transpondeurs peuvent répondre à des normes de fonctionnement spécifiques tout en conservant un encombrement réduit.

Grâce à l'invention, on peut utiliser des dispositifs électroniques particuliers, par exemple une pièce d'horlogerie de type montre, pour des utilisations de transferts de données de type NFC, et qui ont deux fonctions. En particulier, cette montre peut être munie d'un système de paiement utilisable comme une carte bancaire de paiement à faible distance, et d'une autre fonction.

Selon une forme de réalisation particulière de l'invention la première antenne est configurée et disposée pour que le premier transpondeur forme un circuit résonateur de la deuxième antenne.

Selon une forme de réalisation particulière de l'invention, la première et la deuxième antenne sont agencées dans la continuité l'une de l'autre.

Selon une forme de réalisation particulière de l'invention, la première antenne comprend un premier ensemble de spires, et la deuxième antenne comprend un deuxième ensemble de spires.

Selon une forme de réalisation particulière de l'invention, le premier ensemble de spires et le deuxième ensemble de spires forment au moins en partie une spirale.

Selon une forme de réalisation particulière de l'invention, le premier ensemble de spires et le deuxième ensemble de spires sont disjoints, de manière à ce que la spirale soit discontinue, une césure étant agencée à la frontière du premier ensemble de spires et du deuxième ensemble de spires.

Selon une forme de réalisation particulière de l'invention, la spirale comprend un troisième ensemble de spires au-delà du deuxième ensemble de spires et du premier ensemble de spires.

Selon une forme de réalisation particulière de l'invention, le troisième ensemble de spires internes est libre de connexion

Selon une forme de réalisation particulière de l'invention, le deuxième transpondeur est inactif, lorsque le premier transpondeur est actif, et le premier transpondeur est inactif lorsque le deuxième transpondeur est actif.

Selon une forme de réalisation particulière de l'invention, le premier système électronique et le deuxième système électronique comportent chacun une capacité, de sorte que chaque circuit résonateur comprenne une capacité agencée en parallèle du premier ou du deuxième ensemble de spires

Selon une forme de réalisation particulière de l'invention, le premier transpondeur a une première fonction, par exemple de paiement, et le deuxième transpondeur a une deuxième fonction différente de la première fonction, par exemple de contrôle d'accès.

Selon une forme de réalisation particulière de l'invention, les transpondeurs sont du type NFC, notamment pour servir de moyen de paiement.

Selon une forme de réalisation particulière de l'invention, le premier ensemble de spires, et le deuxième ensemble de spires, et le troisième ensemble de spires s'étendent dans un même plan.

L'invention se rapporte également à un dispositif électronique comprenant une telle paire de transpondeurs.

Selon une forme de réalisation particulière de l'invention, le dispositif électronique est une pièce d'horlogerie, telle une montre.

Selon une forme de réalisation particulière de l'invention, la spirale forme un cadran de la pièce d'horlogerie.

### Brève description des figures

Les buts, avantages et caractéristiques de la présente invention apparaîtront à la lecture de plusieurs formes de réalisation données uniquement à titre d'exemples non limitatifs, en référence aux dessins annexés dans lesquels :
- la figure 1 montre une représentation schématique d'une vue de dessus d'un premier mode de réalisation d'une paire de transpondeurs selon l'invention, et
- la figure 2 montre une représentation schématique d'une vue de dessus d'une montre comportant une paire de transpondeurs selon l'invention.

### Description détaillée de l'invention

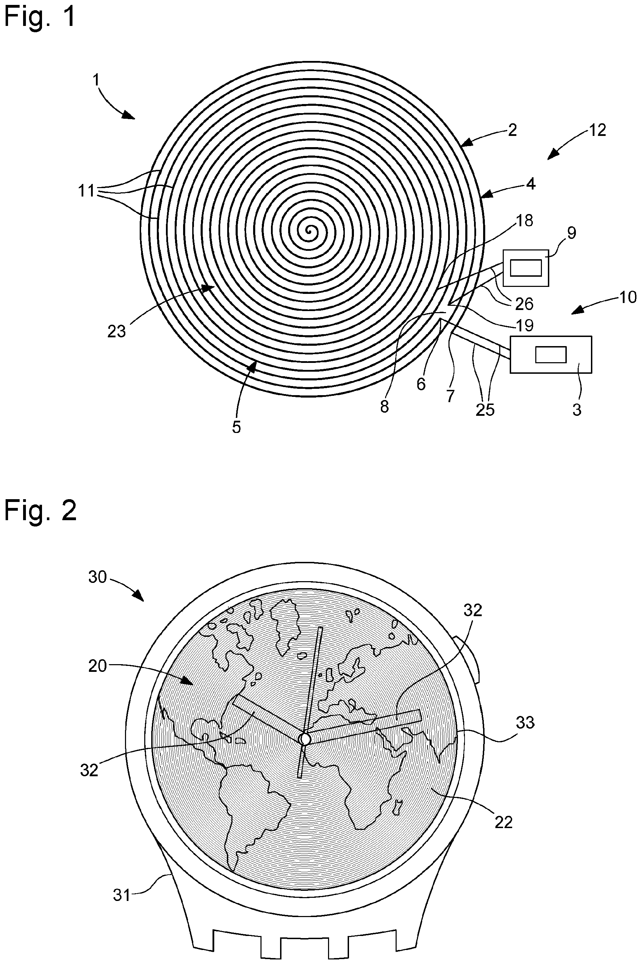

Sur la figure 1, est représenté un mode de réalisation d'une paire de transpondeurs 1 comprenant un premier transpondeur 10 et un deuxième transpondeur 12.

Le protocole de communication est par exemple de type NFC (pour Near Field Communication en anglais), ou CCP en français (pour Communication en Champs Proche). Cette technologie est utilisée en particulier pour les moyens de paiement, par exemple pour les cartes de paiement, qui peuvent payer à distance à l'aide de terminaux dits « sans contact ».

Le premier transpondeur 10 comporte un premier système électronique 3 de gestion de l'envoi et de la réception de données et le deuxième transpondeur 12 comporte un deuxième système électronique 9 de gestion de l'envoi et de la réception de données. Le couple de transpondeurs 1 comprend en outre une antenne en forme de spirale 2.

La spirale 2 comporte un ruban enroulé formant une pluralité de spires 11 concentriques, qui s'étend sensiblement dans le même plan afin de minimiser l'épaisseur de l'antenne. Ainsi, toutes les spires 11 de la spirale 2 sont enroulées dans le même plan.

Le premier système électronique 3 et le deuxième système électronique 9 sont par exemple des circuits intégrés muni d'une puce configurée pour gérer les communications de type NFC.

Chaque système électronique 3, 9 est connecté à la spirale 2 par deux points de connexion 6, 7, 18, 19 agencés sur le ruban.

Une première paire de fils 25 relie les deux premiers points de connexion 6, 7 au premier système électronique 3. Une deuxième paire de fils 26 relient les deux deuxièmes points de connexion 18, 19 au deuxième système électronique 3. Les fils 25, 26 sont par exemple soudés, ou collés avec une colle conductrice, aux points de connexion 6, 7, 18, 19 et au circuit intégré.

Les spires 11 comprises entre les deux points de connexion 6, 7 du premier transpondeur 10 forment un premier ensemble de spires 4, et donc une première antenne du premier transpondeur 10. Le premier ensemble de spires 4 comprend plusieurs spires adjacentes les plus excentrées de la spirale 2, et dont le rayon de courbure est le plus élevé. Sur la figure 1, le premier ensemble de spires 4 comprend deux spires complètes. Le premier ensemble de spires 4 peut bien-sûr en comprendre davantage, par exemple trois, quatre, cinq ou plus, ou bien une seule spire ou une partie de spire.

Les spires 11 comprises entre les deux points de connexion 18, 19 du deuxième transpondeur 12 forment un deuxième ensemble de spires 5, et donc une deuxième antenne du deuxième transpondeur 12. Le deuxième ensemble de spires 5 comprend plusieurs spires adjacentes, qui suivent les spires 11 du premier ensemble de spires 4. Les spires 11 du deuxième ensemble de spires 5 sont plus concentriques que celles du premier ensemble de spires 4. Elles ont un rayon de courbure plus petit que celui des spires du premier ensemble de spires 4.

Les deux premiers points de connexion 6, 7 sont de préférence agencés aux deux extrémités du premier ensemble de spires 4 externes. Autrement dit, les deux points de connexion 6, 7 sont respectivement agencés au point le plus excentré et au point le plus concentrique du premier ensemble de spires 4.

Les deux deuxièmes points de connexion 18, 19 sont de préférence agencés aux deux extrémités du deuxième ensemble de spires 5. Ainsi, les deux deuxièmes points de connexion 18, 19 sont respectivement agencés au point le plus excentré et au point le plus concentrique du deuxième ensemble de spires 5.

Dans le mode de réalisation représenté sur la figure 1, le premier ensemble de spires 4 et le deuxième ensemble de spires 5 sont disjoints, de manière à ce que la spirale 2 soit discontinue. Autrement dit, la spirale 2 comprend deux parties distinctes séparées par une césure 8 agencée à la frontière du premier ensemble de spires 4 et du deuxième ensemble de spires 5. Ainsi, les deux ensembles de spires 4, 5 ne sont pas directement reliés l'un à l'autre.

La césure 8 est de préférence disposée après le point de connexion 6 le plus concentrique des deux points de connexion 6, 7. Ainsi, les deux points de connexion 6, 7 ne sont donc pas reliés au deuxième ensemble de spires 5.

Dans ce mode de réalisation, la spirale 2 comporte un troisième ensemble de spires 23 s'étendant en-dehors des points de connexion 6, 7 du premier 10 et du deuxième transpondeur 12. En outre, le troisième ensemble de spires 23 est libre de connexion. Autrement dit, il n'existe pas de connexion sur le troisième ensemble de spires 23, que cela soit avec le premier système électronique 3 ou le deuxième système électronique 9. Les spires 11 les plus concentriques de la spirale 2 forment le troisième ensemble de spires 23.

Sur la figure 1, le troisième ensemble de spires 23 comprend toutes les spires internes 11 depuis le point de connexion 18 le plus concentrique de la spirale 2. Ainsi, le troisième ensemble de spires 23 comprend ici au moins vingt-cinq spires. Elle peut bien-sûr en comprendre moins ou davantage, par exemple une dizaine, une vingtaine, une trentaine de spires ou plus.

Le troisième ensemble de spires 23 permet d'améliorer la portée de la transmission de données à distance entre ces transpondeurs 10, 12 et un autre transpondeur ou un terminal. En effet, le troisième ensemble de spires 23 permet d'accumuler plus d'énergie que le premier ensemble de spires 4 ou le deuxième ensemble de spires 5 seuls. Cette énergie supplémentaire permet ainsi d'augmenter la distance de transmission.

Le premier ensemble de spires 4, le deuxième ensemble de spires 5 et le troisième ensemble de spires 23 s'étendent dans un même plan.

Dans ce mode de réalisation, le premier transpondeur 10 forme un circuit résonateur du deuxième transpondeur 12, et le deuxième transpondeur 12 forme un circuit résonateur du premier transpondeur 10. Un circuit résonateur permet d'améliorer la portée de communication d'une antenne de transpondeur.

De préférence, le deuxième transpondeur 12 est inactif, lorsque le premier transpondeur 10 est actif, et le premier transpondeur 10 est inactif lorsque le deuxième transpondeur 12 est actif, pour éviter de possibles interférences dans les communications de chaque transpondeur 10, 12.

De préférence, le premier 3 et le deuxième système électronique 9 comprennent chacun une capacité. Ainsi, chaque capacité est connectée en parallèle à l'ensemble de spires 11 correspondant. Grâce à un circuit résonateur muni d'une capacité, chaque transpondeur 10, 12 augmente encore davantage la portée du transfert de données de 30 à 40%.

En outre, cette paire de transpondeurs 1 permet d'associer deux fonctions différentes. Ainsi, le premier transpondeur 10 a une première fonction, et le deuxième transpondeur 12 a une deuxième fonction. La deuxième fonction est de préférence différente de la première fonction.

Par exemple, la première fonction est une fonction de paiement, semblable à une carte bancaire, et la deuxième fonction est une fonction de contrôle d'accès, ou de « ticketing ».

Une telle paire de transpondeurs 1 peut être utilisée dans un produit électronique. Par exemple, une pièce d'horlogerie configurée pour effectuer des paiements comme une carte bancaire. Le transpondeur de type NFC permet par exemple le paiement à faible distance, appelé « sans contact ».

De préférence, on associe le transpondeur ayant l'antenne la plus performante à la fonction la plus exigeante concernant les normes demandées pour la distance de communication, par exemple pour la fonction de paiement.

La première antenne ayant la meilleure portée, on choisit le premier transpondeur 10 pour cette fonction plus exigeante. Ainsi, on peut répondre aux normes plus aisément.

Sur la figure 2, est représentée une montre 30 comprenant une paire de transpondeurs selon l'invention. La montre 30 comprend un boîtier 31, dans lequel est logé un mouvement d'horlogerie, de préférence un mouvement électronique, et des aiguilles 32 pour indiquer l'heure. La paire de transpondeurs 1 est également disposée dans le boîtier 31. Dans ce mode de réalisation, la spirale 22 de la paire de transpondeurs est utilisée comme cadran de la montre 30. La spirale 22 est agencée sous la glace 33 de la montre 30. Les aiguilles 32 se déplacent au-dessus de la spirale 22, la spirale 22 étant visible à travers la glace de 33 par un utilisateur. Les systèmes électroniques 3 et les points de contact sont agencés sous la spirale 22 pour être cachés.

Optionnellement, la surface supérieure de la spirale 22 comprend un motif, dans un but de décoration ou pour indiquer des indices d'heures par exemple.

Naturellement, l'invention n'est pas limitée aux modes de réalisation de transpondeur et de dispositif électronique décrits en référence aux figures et des variantes pourraient être envisagées sans sortir du cadre de l'invention. Par exemple, les formes des antennes et leurs dispositions peuvent être différentes dans d'autres modes de réalisation.

## Revendications

1. Paire de transpondeurs (1, 20) comprenant un premier transpondeur (10) muni d'un premier système électronique (3) de gestion de l'envoi et de la réception de données et d'une première antenne, le premier système électronique (3) étant connecté à la première antenne, la paire de transpondeurs (1) comprenant un deuxième transpondeur (12) muni d'un deuxième système électronique (9) de gestion de l'envoi et de la réception de données et d'une deuxième antenne, le deuxième système électronique (9) étant connecté à la deuxième antenne, **caractérisée en ce que** la deuxième antenne est configurée et disposée pour que le deuxième transpondeur (12) forme un circuit résonateur de la première antenne.

2. Paire de transpondeurs selon la revendication 1, **caractérisée en ce que** la première antenne est configurée et disposée pour que le premier transpondeur (10) forme un circuit résonateur de la deuxième antenne.

3. Paire de transpondeurs selon l'une, quelconque, des revendications précédentes, **caractérisée en ce que** la première et la deuxième antenne sont agencées dans la continuité l'une de l'autre.

4. Paire de transpondeurs selon l'une, quelconque, des revendications précédentes, **caractérisée en ce que** la première antenne comprend un premier ensemble de spires (4), et la deuxième antenne comprend un deuxième ensemble de spires (5).

5. Paire de transpondeurs selon la revendication 4, **caractérisée en ce que** le premier ensemble de spires (4) et le deuxième ensemble de spires (5) forment au moins en partie une spirale (2, 22).

6. Paire de transpondeurs selon la revendication 5, **caractérisée en ce que** le premier ensemble de spires (4) et le deuxième ensemble de spires (5) sont disjoints, de manière à ce que la spirale (2) soit discontinue, une césure (8) étant agencée à la frontière du premier ensemble de spires (4) et du deuxième ensemble de spires (5).

7. Paire de transpondeurs selon l'une, quelconque, des revendications précédentes, **caractérisée en ce que** la spirale (2) comprend un troisième ensemble de spires (23) au-delà du deuxième ensemble de spires (5).

8. Paire de transpondeurs selon la revendication 7, **caractérisée en ce que** le troisième ensemble de spires internes (23) est libre de connexion.

9. Paire de transpondeurs selon l'une, quelconque, des revendications précédentes, **caractérisée en ce que** le deuxième transpondeur (12) est inactif, lorsque le premier transpondeur (10) est actif, et le premier transpondeur (10) est inactif lorsque le deuxième transpondeur (12) est actif.

10. Paire de transpondeurs selon l'une, quelconque, des revendications précédentes, **caractérisée en ce que** le premier système électronique (3) et le deuxième système électronique (9) comportent chacun une capacité, de sorte que chaque circuit résonateur comprenne une capacité agencée en parallèle du premier (4) ou du deuxième ensemble de spires (5).

11. Paire de transpondeurs selon l'une, quelconque, des revendications précédentes, **caractérisée en ce que** le premier transpondeur (10) a une première fonction, par exemple de paiement, et le deuxième transpondeur (12) a une deuxième fonction différente de la première fonction, par exemple de contrôle d'accès.

12. Paire de transpondeurs selon l'une, quelconque, des revendications précédentes, **caractérisée en ce qu'**ils sont du type NFC, notamment pour servir de moyen de paiement.

13. Dispositif électronique comprenant une paire de transpondeurs (20) selon l'une, quelconque, des revendications précédentes.

14. Dispositif électronique selon la revendication 13, **caractérisée en ce qu'**il est une pièce d'horlogerie, telle une montre (30),

15. Dispositif électronique selon la revendication 14, **caractérisé en ce que** la spirale (22) forme un cadran de la pièce d'horlogerie.
